# EUROPÄISCHE PATENTSCHRIFT

(11) **EP 0 467 060 B1**
(45) Veröffentlichungstag und Bekanntmachung des Hinweises auf die Patenterteilung: **26.10.1994**
(21) Anmeldenummer: 91109119.7
(22) Anmeldetag: 04.06.1991
(51) Int. Cl.: B23H 7/02, B23H 11/00, B23H 3/00

(54) **Maschine zum funkenerosiven Schneiden mit einem die Rückwand des Arbeitsflüssigkeits-Behälters durchquerenden Führungsarm**
EDM cutting machine using a guide arm which traverses the back wall of the working fluid reservoir
Machine de découpage par électro-érosion utilisant un bras de guidage traversant la paroi arrière du réservoir de fluide de travail

(30) Priorität: 20.06.1990 DE 4019662
(43) Veröffentlichungstag der Anmeldung: 22.01.1992
(73) Patentinhaber: AG für industrielle Elektronik AGIE Losone bei Locarno, CH-6616 Losone/Locarno (CH)
(72) Erfinder: Lodetti, Attilio, CH-6616 Losone (CH); Medici, Brenno, CH-6695 Peccia (CH)
(74) Vertreter: EGLI-EUROPEAN PATENT ATTORNEYS

(56) Entgegenhaltungen:
- EP-A- 0 133 160
- EP-A- 0 304 882
- DE-A- 3 934 638

## Beschreibung

Die Erfindung betrifft eine Maschine zum funkenerosiven Schneiden eines Werkstückes gemäß dem Obergriff des Patentanspruches 1.

Eine derartige Maschine ist aus der DE 39 34 638 A1 bekannt. Dort wird ein außerhalb des Behälters für die Arbeitsflüssigkeit angeordnetes Schließteil durch eine Gleitdichtung gegenüber der Behälterrückwand abgedichtet. Das Schließteil ist in oberen und unteren Lagern geführt, die mittels Stützelementen an der Behälterrückwand befestigt sind und das Schließteil in vertikaler Richtung und in Richtung parallel zur Längsachse des Führungsarmes abstützen. Von der Außenfläche des Schließteiles steht ein Stift ab, der in einem Ring verschieblich geführt ist, wobei der Ring an einem mit dem unteren Kreuzschlitten verbundenen Hebel angebracht ist Dieser Hebel übergreift das Stützelement für die beiden unteren Lager, was zur Folge hat, daß die Behälterrückwand einen relativ großen Abstand zur gegenüberliegenden Wand des Ständers der Maschine ausweisen muß. Weiter ist dort vorgesehen, daß das Schließteil in Richtung parallel zum Führungsarm der Maschine beweglich ist, also einen veränderlichen Abstand zur Behälterrückwand einnehmen kann, so daß die zwischen der Behälterrückwand und dem Schließteil angeordnete erste Dichtung ihre Funktion je nach Abstand zwischen Schließteil und Behälterrückwand unterschiedlich gut erfüllen kann Weiterhin muß das dortige Schließteil sehr maßgenau gefertigt sein, damit es zwischen den oberen und unteren Führungen bei Verschiebung des Behälters frei gleiten kann und sich auch nicht verkantet, was aufgrund des außermittig von dem Schließteil abstehenden Stiftes leicht möglich ist Schließlich ist bei dieser bekannten Maschine der Führungsarm mittels einer flexiblen Faltenbalgdichtung gegenüber dem Schließteil abgedichtet.

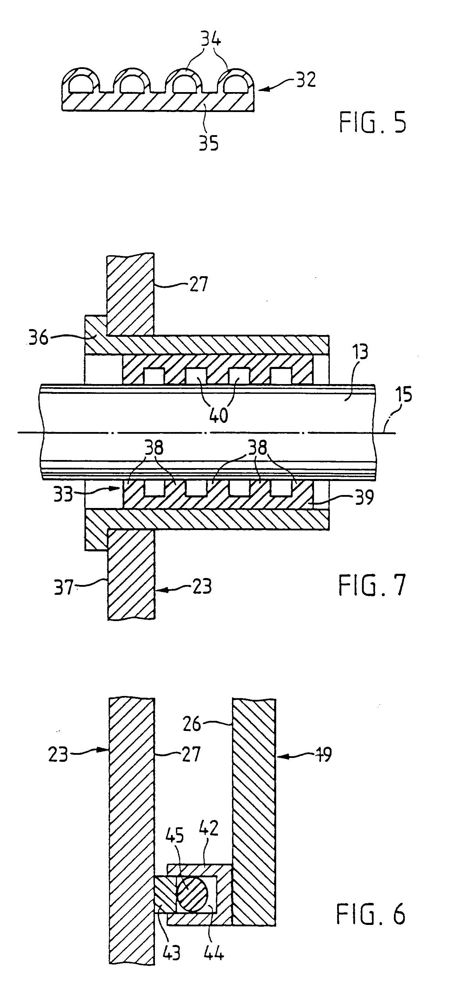

Die EP 0 304 882 zeigt eine Vielzahl verschiedener Varianten von Möglichkeiten zur Abdichtung des Durchtrittes des Führungsarmes einer Elektroerosions-Schneidmaschine durch die Rückwand des Arbeitsbehälters. Bei einer Variante (Fig. 5j) ist die Schließplatte außerhalb des Behälters angeordnet und steht unmittelbar in gleitendem Kontakt mit der Außenseite der Behälterrückwand. Gegen die sie durch durch ein Verstärkungsteil gedrückt wird, wobei bei dieser Variante kontrollierte Lecks zugelassen sind Das Schließteil stützt sich bei dieser Variante auch unmittelbar auf den Führungsarm ab.

Bei einer anderen Variante der EP 0 304 882 ist die Behälterrückwand doppelwandig ausgebildet, wobei zwischen diesen beiden Wänden ein an dem Führungsarm abgestütztes Schließteil angeordnet ist, das durch Lippendichtungen gegenüber den beiden benachbarten Wänden abgedichtet ist. Bei dieser Variante ist der Boden des Behälters über die beiden parallelen Wände herausgezogen und bildet dort eine Rinne für Leckflüssigkeit, in welcher ein Ablaufstutzen angeordnet ist.

Bei einer weiteren Variante der EP 0 304 882 liegt das Schließteil innerhalb des Behälters und ist entweder über flexible Dichtungen oder unmittelbar an einer den Führungsarm umgebenden Hülse abgestützt, wobei bei einer Variante diese Hülse wiederum über einen Hebel mit dem unteren Schlitten des Kreuztisches verbunden ist.

Die EP 01 33 160 oder US 4,565,915 zeigt eine ähnliche Maschine zum funkenerosiven Schneiden, bei der die dem Maschinenständer zugewandte Rückseite des Behälters zwei im Abstand zueinander angeordnete parallele Rückwände aufweist, zwischen denen sich ein Schließteil befindet, das über Lippendichtungen gegenüber den beiden genannten parallelen Wänden abgedichtet ist. Dieses Schließteil ist auf einer den Führungsarm umgebenden Hülse gelagert, wobei diese Hülse gegenüber dem Führungsarm ebenfalls abgedichtet ist. Die Unterseite des Arbeitsbehälters weist im Bereich außerhalb der äußeren Behälterrückwand eine Rinne mit einem Ablaufstutzen auf, über den Leckflüssigkeit gesammelt werden kann. Diese Maschine hat den Nachteil, daß die zur Bewegung des Schließteils erforderlichen Kräfte den Führungsarm rechtwinklig zu seiner Längsachse belasten, was ihn rechtwinklig zu seiner Längsachse verbiegt und dadurch die Präzision der Bearbeitung des Werkstückes beeinträchtigt. Zudem ist bei dieser Maschine auch nachteilig, daß es nötig ist, die Führung des Schließteils an der Rückwand des Behälters zu gewährleisten, so daß diese Rückwand aufwendig ist, da sie entweder doppelwandig ausgebildet oder mit Führungsschienen versehen sein muß.

Ein aus der US 4,647,747 oder US 4,663,509 bekannter Vorschlag sieht vor, den Führungsarm durch die Rückwand des Behälters durchzuführen und die Abdichtung zwischen Führungsarm und Rückwand durch ein horizontal bewegliches flexibles Schließteil zu gewährleisten, das als Band ausgebildet und an seinen Enden auf- und abrollbar ist. Nachteilig ist dabei, daß ein solches wie ein beidseitiger Rolladen funktionierendes Schließteil sehr kompliziert und aufwendig ist.

Ein aus der EP 0 264 716 oder US 4,808,786 bekannter Vorschlag sieht vor, den Führungsarm durch die Rückwand des Behälters durchzuführen und die Abdichtung zwischen dem Führungsarm und der Rückwand durch ein als Balg ausgebildetes flexibles Schließteil zu gewährleisten. Nachteilig ist dabei, daß ein solcher Balg dem Druck der Arbeitsflüssigkeit nicht standhält, wenn der Behälter mit Arbeitsflüssigkeit gefüllt ist.

Die DE 33 03 758.A1 beschreibt eine Senkerodiermaschine, deren die Arbeitsflüssigkeit enthaltender Behälter mit klappbaren Wänden versehen ist. Zur Abdichtung der Wände gegeneinander sind Dichtungselemente in Form von Blähdichtungen vorgesehen, die nur dann durch Druckluft beaufschlagt werden, wenn der Behälter geschlossen ist. Zum Verschieben der weiteren Wände muß die Blähdichtung entlastet werden.

Aufgabe der Erfindung ist es, die eingangs genannte Maschine zum funkenerosiven Schneiden dahingehend zu verbessern, daß eine Abdichtung des Schließteils an der Rückwand des Behälters gewährleistet ist, die bei Bewegung des Behälters keine rechtwinklig zur Längsachse des Führungsarmes wirkende Kräfte auf diesen überträgt, wodurch eine hochpräzise Bearbeitung des Werkstückes ermöglicht wird. Weiterhin soll der Abstand zwischen dem Behälter und dem Maschinenständer möglichst gering sein und das Schließteil soll bei möglichst einfachem Aufbau und ohne aufwendige Führungen seine Funktion sicher erfüllen können.

Diese Aufgabe wird durch die im Kennzeichenteil des Patentanspruches 1 angegebebenen Merkmale gelöst. Vorteilhafte Ausgestaltung und Weiterbildungen der Erfindung sind den Unteransprüchen zu entnehmen.

Ein wesentlicher Vorteil der erfindungsgemässen Maschine ist, dass die zur Bewegung des Schliessteils erforderlichen Kräfte den Führungsarm in keiner Weise rechtwinklig zu seiner Längsachse belasten, was eine hochpräzise Bearbeitung des Werkstücks ermöglicht.

Zur Ergänzung der Abdichtung kann vorzugsweise das Schliessteil in seinem unteren Bereich auf seiner dem Behälter zugewandten Seite mit einer mit einem Abflussstutzen versehenen Rinne versehen sein. Dabei kann die Rinne vorzugsweise als das Schliessteil am unteren Schlitten fest abstützendes Verbindungselement ausgebildet sein.

Vorzugsweise können die ersten Abdichtungsmittel zur gleitfähigen Abdichtung zwischen dem Schliessteil und der Rückwand zumindest zwei im Abstand voneinander angeordnete Dichtungsteile umfassen. Dabei kann vorzugsweise zumindest ein Dichtungsteil durch Gasdruck aufblasbar sein. Auch können vorzugsweise mehrere Dichtungsteile integral mit einem Dichtungskörper verbunden und daran als je ein gewölbter Vorsprung angeformt sein, wobei der Dichtungskörper vorzugsweise zusammen mit den daran angeformten Dichtungsteilen eine Labyrinthdichtung bilden kann.

Vorteilhaft ist dabei, dass mit diesen zusätzlichen Massnahmen eine auf einfache Weise und mit geringem Aufwand herstellbare und montierbare Abdichtung zwischen dem Schliessteil und der Rückwand gewährleistet ist.

Vorzugsweise können die zweiten Abdichtungsmittel zur gleitfähigen Abdichtung zwischen dem Führungsarm und dem Schliessteil, in einer ersten Ausbildung, zumindest einen Balg umfassen, der den Führungsarm auf zumindest einem Teil seiner Länge umschliesst, wobei das eine Ende des Balges mit dem Führungsarm und das andere Ende des Balges mit dem Schliessteil abdichtend verbunden ist.

Vorzugsweise können die zweiten Abdichtungsmittel zur gleitfähigen Abdichtung zwischen dem Führungsarm und dem Schliessteil, in einer zweiten Ausbildung, zwischen dem Führungsarm und dem Schliessteil einen Hülsenteil, der an einer dem Ständer zugewandten Seite des Schliessteils fest angeordnet ist und den Führungsarm mit Spiel umschliesst, sowie zumindest zwei innerhalb des Hülsenteils im Abstand voneinander angeordnete, den Führungsarm abdichtend und gleitfähig umschliessende Dichtungsteile umfassen, wobei der Hülsenteil zumindest mit den beiden Dichtungsteilen und dem Führungsarm zusammenwirkt, um einen den Führungsarm umschliessenden Dichtungsraum zu definieren. Dabei kann der Dichtungsraum vorzugsweise unter Gasdruck setzbar sein.

Von diesen beiden Ausbildungen der zweiten Abdichtunsmittel kann die eine oder die andere verwendet werden, was aber nicht ausschliesst, dass beide Ausbildungen zusammen, einander ergänzend, verwendet werden können.

Vorteilhaft ist dabei, dass mit diesen zusätzlichen Massnahmen eine auf einfache Weise und mit geringem Aufwand herstellbare und montierbare Abdichtung zwischen dem Führungsarm und dem Schliessteil gewährleistet ist.

Nachstehend wird die Erfindung anhand von Ausbildungsbeispielen unter Bezugnahme auf die Zeichnung näher erläutert, wobei in allen Figuren die einander entsprechenden Teile mit gleichen Bezugszeichen bezeichnet sind. Es zeigen:
- Fig. 1: eine schematische Perspektivansicht eines ersten Ausbildungsbeispiels einer erfindungsgemässen Maschine mit teilweise aufgebrochenen Teilen,
- Fig. 2: eine schematische Perspektivansicht eines zweiten Ausbildungsbeispiels einer erfindungsgemässen Maschine mit teilweise aufgebrochenen Teilen,
- Fig. 3: eine schematische und partielle Seitenansicht des Ausbildungsbeispiels der Fig. 1 im vertikalen Längsschnitt durch den unteren Führungsarm und entsprechenden Schnitt durch den Behälter,
- Fig. 4: eine schematische und partielle Draufsicht des Ausbildungsbeispiels der Fig. 1 im horizontalen Längsschnitt durch den Führungsarm und entsprechenden Schnitt durch den Behälter,
- Fig. 5: eine schematische Darstellung eines ersten Beispiels der ersten Abdichtungsmittel, im Querschnitt,
- Fig. 6: eine schematische Darstellung eines zweiten Beispiels der ersten Abdichtungsmittel, im Querschnitt, und
- Fig. 7: eine schematische Darstellung der zweiten Abdichtungsmittel, im horizontalen Längsschnitt durch den Führungsarm.

Eine erfindungsgemässe Maschine zum funkenerosiven Schneiden eines Werkstücks 1 mittels einer draht- oder bandförmigen Werkzeugelektrode 2 umfasst ein Maschinenbett 3 und einen Ständer 4. Auf dem Maschinenbett 3 ist ein Kreuzschlittentisch 5 mit zwei gekreuzt aufeinanderliegenden Schlitten 6, 7 angeordnet. Der obere Schlitten 6 ist mit einer Aufspannvorrichtung 8 für das Werkstück 1 versehen und er ist gleitend verschiebbar sowie einstellbar am unteren Schlitten 6 abgestützt. Dieser ist seinerseits gleitend verschiebbar sowie einstellbar am Maschinenbett 3 abgestützt.

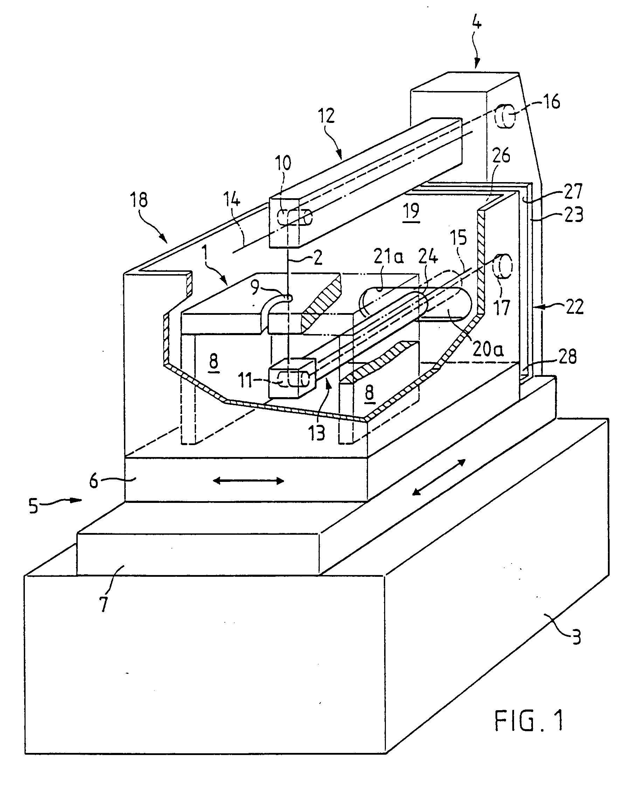

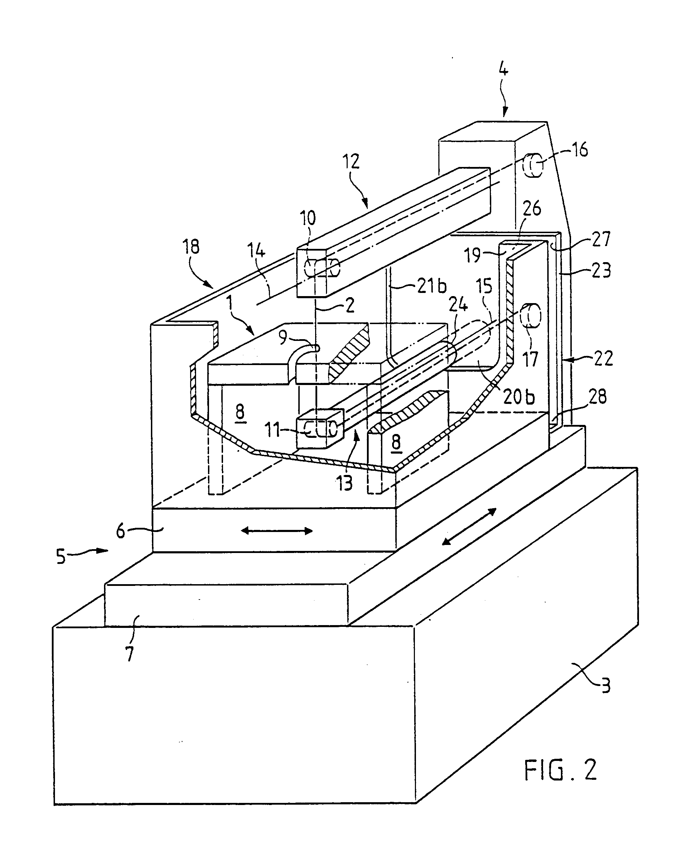

Die Werkzeugelektrode 2 wird durch eine Bearbeitungszone 9 des auf dem Kreuzschlittentisch 5 aufgespannten Werkstücks 1 geführt. Zu diesem Zweck läuft die Werkzeugelektrode 2 zwischen einer über dem Werkstück 1 angeordneten oberen Elektrodenführung 10 und einer unter dem Werkstück 1 angeordneten unteren Elektrodenführung 11 gespannt. Die obere Elektrodenführung 10 ist über einen oberen Führungsarm 12 und die untere Elektrodenführung 11 über einen unteren Führungsarm 13 am Ständer 4 abgestützt. In den in Fig. 1 und 2 dargestellten Ausbildungen sind die beiden Führungsarme 12 und 13 länglich und eine horizontale Längsachse 14 und 15 aufweisend ausgebildet, in anderen Ausbildungen ist zumindest der untere Führungsarm 13 auf solche Weise ausgebildet. Die Werkzeugelektrode 2 wird von einer nicht dargestellten Vorratsspule abgezogen, über zumindest eine obere Rolle 16 umgelenkt, von dort nacheinander zur oberen Elektrodenführung 10, zur Bearbeitungszone 9 und zur unteren Elektrodenführung 11 geleitet, anschliessend über zumindest eine untere Rolle 17 umgelenkt und dann auf nicht dargestellte Weise entsorgt, beispielsweise aufgespult oder zerhackt.

Am Kreuzschlittentisch 5 ist die Verschiebungsrichtung des unteren Schlittens 7 parallel zur horizontalen Längsachse 15 des unteren Führungsarms 13 orientiert, während die Verschiebungsrichtung des oberen Schlittens 6 in zu dieser Längsachse 15 orthogonaler horizontaler Richtung orientiert ist. Somit ist der untere Schlitten 7 relativ zum Ständer 4 nur parallel zur Längsachse 15 des Führungsarms 13 und der obere Schlitten 6 relativ zum unteren Schlitten 7 nur rechtwinklig zur Längsachse 15 des Führungsarms 13 bewegbar, während die Verschiebung des Werkstücks 1 mit Hilfe des Kreuzschlittentisches 5 relativ zum Ständer 1 stets in einer horizontalen Ebene aber wahlweise in Richtung parallel zur Längsachse 15 des unteren Führungsarms 13 sowie in dazu orthogonaler horizontaler Richtung und in jeglicher Kombination dieser Richtungen erfolgen kann.

Die Maschine ist mit einem Behälter 18 für eine Arbeitsflüssigkeit versehen. Der Behälter 18 ist am oberen Schlitten 6 abgestützt und umschliesst die Aufspannvorrichtung 8 auf solche Weise, dass das Werkstück 1 oder zumindest dessen Bearbeitungszone 9 von der Arbeitsflüssigkeit umgeben wird, wenn der Behälter 18 mit Arbeitsflüssigkeit gefüllt ist. Der Behälter 18 weist eine im wesentlichen ebene, dem Ständer 4 gegenüberliegende, vertikale Rückwand 19 auf, die mit dem oberen Schlitten 6 fest verbunden ist.

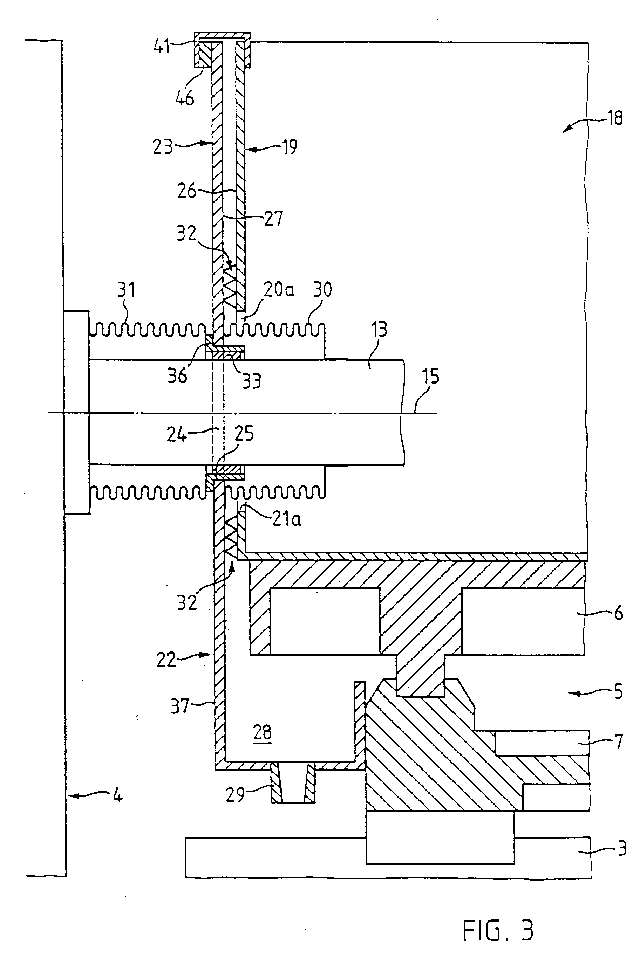

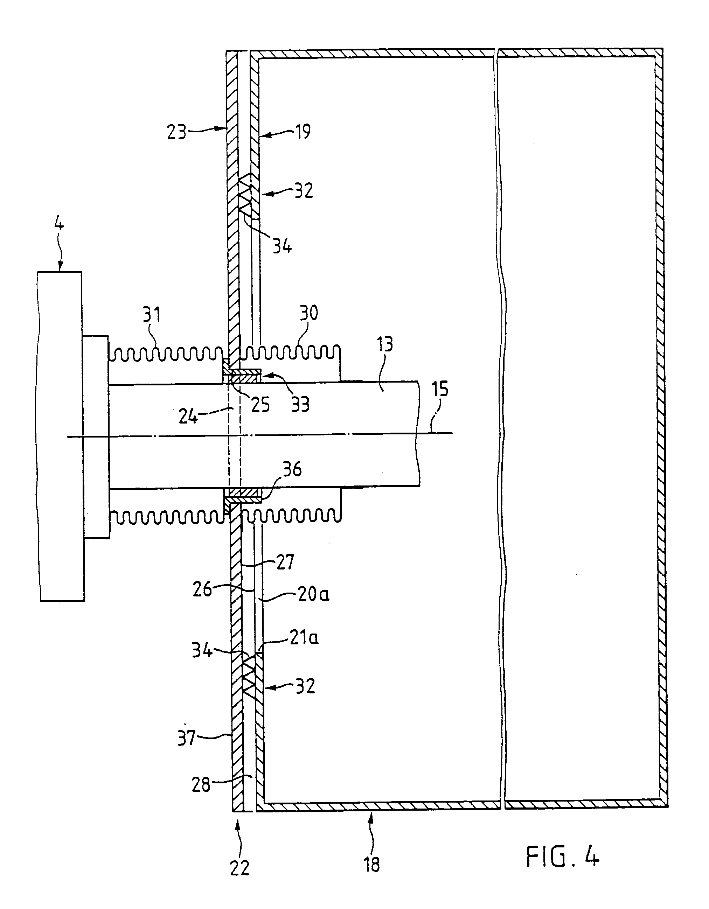

Um die Werkzeugelektrode 2 der Bearbeitungszone 9 zuzuführen, durchquert der untere Führungsarm 13 in Richtung seiner Längsachse 15 diese Rückwand 19 des Behälters 18 rechtwinklig an der Stelle einer Oeffnung 20a (Fig. 1) bzw. 20b (Fig. 2). Die Oeffnung 20a bzw. 20b wird von einem Rand 21a (Fig. 1) bzw. 21b (Fig. 2) begrenzt, der den unteren Führungsarm 13 im Abstand davon umschliesst. Bei der Ausbildung nach Fig. 1 hat der Rand 21a der Oeffnung 20a die geometrische Form einer stetigen konvexen geschlossenen Kurve, die etwa einem an seinen beiden vertikalen Kurzseiten mit angefügten Halbkreisen erweiterten Rechteck entspricht. Bei der Ausbildung nach Fig. 2 und 3 hat der Rand 21b der Oeffnung 20b die geometrische Form eines etwa U-förmigen Kurvensegments, die von der geometrischen Form des Rands 21a der Oeffnung 20a in Fig. 1 ableitbar ist, indem man den oberhalb der Oeffnung 20a befindlichen Teil der Rückwand 19 des Behälters 18 entfernt. Fig. 4 gilt hingegen für beide Ausbildungen.

Somit besteht in beiden Ausbildungen die Möglichkeit, innerhalb der vom Rand 21a bzw. 21b gesetzten Grenzen den unteren Führungsarm 13 rechtwinklig zu seiner Längsachse 15 in der Oeffnung 20a bzw. 20b und relativ zur Rückwand 19 zu bewegen.

Damit die Arbeitsflüssigkeit nicht durch die Oeffnung 20a bzw. 20b aus dem Behälter 18 ausfliesst, ist am Behälter 18 ein Schliessteil 22 vorgesehen, der zumindest im Bereich der Oeffnung 20a bzw. 20b im wesentlichen plattenförmig ausgebildet ist. Dieser Plattenteil 23 des Schliessteils 22 ist, wie insbesondere in Fig. 3 und 4 ersichtlich, ausserhalb des Behälters 18 parallel und in geringem Abstand zu einer dem Ständer 4 zugewandten Seite 26 der Rückwand 19 angeordnet und verschiebbar. Der gesamte Schliessteil 22 ist, wie insbesondere in Fig. 3 ersichtlich, mit dem unteren Schlitten 7 fest verbunden.

Die Dimension des Plattenteils 23 ist so gewählt, dass er die Oeffnung 20a bzw. 20b der Rückwand 19 immer, d.h. in jeder Verschiebungslage überdeckt. In horizontaler Richtung wird dies erreicht, indem der Plattenteil 23 und die Rückwand 19 etwa die gleiche horizontale Ausdehnung haben und diese horizontale Ausdehnung zumindest um zweimal den Durchmesser des unteren Führungsarms 13 grösser ist als die grösste horizontale Weite der Oeffnung 20a bzw. 20b, wie insbesondere in Fig. 4 ersichtlich. In vertikaler Richtung wird dies erreicht, indem der Plattenteil 23 bei der Ausbildung nach Fig. 1 zumindest um zweimal und bei der Ausbildung nach Fig. 2 und 3 zumindest um einmal den Durchmesser des unteren Führungsarms 13 grösser ist als die grösste vertikale Weite der Oeffnung 20a. Zur Gewährleistung einer gleitfähigen Abdichtung zwischen dem Schliessteil 22 und der Rückwand 19 sind erste Abdichtungsmittel 32 vorgesehen, die weiter unten näher beschrieben werden.

Ein wesentlicher Vorteil der Ausbildungen nach Fig. 1 und 2 ist, dass die zur Bewegung des Schliessteils erforderlichen Kräfte den Führungsarm in keiner Weise rechtwinklig zu seiner Längsachse belasten, was eine hochpräzise Bearbeitung des Werkstücks ermöglicht.

Bei der Ausbildung nach Fig. 1 ist unter anderem noch vorteilhaft, dass die Herstellung der Rückwand 19 des Behälters 18 und, wie sich weiter unten zeigen wird, der ersten Abdichtungsmittel 32 besonders kostengünstig ist, während bei der Ausbildung nach Fig. 2 unter anderem noch vorteilhaft ist, dass der Führungsarm 13 besonders leicht in den Behälter 18 einführbar ist.

Um die Werkzeugelektrode 2 der Bearbeitungszone 9 zuzuführen, durchquert der untere Führungsarm 13 den Plattenteil 23 des Schliessteils 22 in Richtung seiner Längsachse 15 rechtwinklig an der Stelle einer anderen Oeffnung 24 im Plattenteil 23 des Schliessteils 22. Diese andere Oeffnung 24 wird von einem anderen Rand 25 begrenzt, der den unteren Führungsarm 13 auf in Richtung dessen Längsachse 15 verschiebbare Weise abdichtend umschliesst. Zur Gewährleistung einer gleitfähigen Abdichtung zwischen dem unteren Führungsarm 13 und dem Schliessteil 22 sind zweite Abdichtungsmittel vorgesehen, die weiter unten näher beschrieben werden.

Zur gleitfähigen Abdichtung zwischen dem Schliessteil 22 und der Rückwand 19 umfassen die ersten Abdichtungsmittel 32 in einem ersten, in Fig. 5 dargestellten Ausbildungsbeispiel zumindest zwei, oder wie in den dargestellten Ausbildungen vier im Abstand voneinander angeordnete Dichtungsteile 34, die in Fig. 4 schematisch angedeutet und in Fig. 5 grösser und im Querschnitt schematisch dargestellt sind. Es kann aber auch genügen, dass die ersten Abdichtungsmittel 32 zwei Dichtungsteile 34 umfassen. Die Dichtungsteile 34 sind schlauchförmig ausgebildet und durch Gasdruck bzw. Luftdruck aufblasbar (dies ist nicht näher dargestellt, weil solche aufblasbare Dichtungen an sich bekannt sind). Es kann aber genügen, auch nur einen oder einige der Dichtungsteile 34 aufblasbar auszubilden. Wie in Fig. 5 ersichtlich ist, sind die vier Dichtungsteile 34 integral mit einem Dichtungskörper 35 verbunden und daran als je ein gewölbter Vorsprung angeformt. Zusammen mit den daran angeformten Dichtungsteilen 34 bildet der Dichtungskörper 35 eine an sich bekannte Labyrinthdichtung, die aus einem für Abdichtungszwecke üblicherweise verwendeten elastischen Kunststoff gefertigt ist.

Diese Labyrinthdichtung 34, 35 weist eine geometrische Form auf, die der geometrischen Form des Rands 21a bzw. 21b der Oeffnung 20a bzw. 20b (Fig. 1 bzw. Fig. 2) entspricht. Die Labyrinthdichtung 34, 35 hat also bei der Ausbildung nach Fig. 1 wie der Rand 21a der Oeffnung 20a die geometrische Form einer stetigen konvexen geschlossenen Kurve, bei der Ausbildung nach Fig. 2 und 3 wie der Rand 21b der Oeffnung 20b die geometrische Form eines etwa U-förmigen Kurvensegments.

Zur gleitfähigen Abdichtung zwischen dem Schliessteil 22 und der Rückwand 19 umfassen die ersten Abdichtungsmittel 32 in einem zweiten, in Fig. 6 dargestellten Ausbildungsbeispiel ein U-förmiges Profil 42, das an der dem Ständer 4 zugewandten Seite 26 der Rückwand 19 angeordnet ist. Dieses U-förmige Profil 42 befindet sich somit zwischen der dem Ständer 4 zugewandten Seite 26 der Rückwand 19 und der dem Behälter 18 zugewandten Seite 27 des Plattenteils 23 des Schliessteils 22. In das U-förmige Profil 42 ist zumindest teilweise ein Gleitteil 43 von beispielsweise rechteckigem Querschnitt eingesetzt. Das Gleitteil 43 ist beispielsweise aus einer mit Graphit geladenen PTFE-Matrix gefertigt und bewerkstelligt an der Seite 27 des Plattenteils 23 eine gleitfähige Abdichtung, wenn es daran angepresst wird. Der in das U-förmige Profil 42 eingesetzte Teil des Gleitteils 43 definiert im U-förmigen Profil 42 einen Hohlraum 44, in den eine Dichtung 45 eingesetzt ist. In dem zwischen dem U-förmigen Profil 42 und der Dichtung 45 verbleibenden Hohlraum 44 kann auf nicht dargestellte Weise Druckluft zugeführt werden. Der Druck dieser Druckluft übt auf die Dichtung 45 eine Kraft in Richtung des Schliessteils 22 aus. Dies bewirkt, dass die Dichtung 45 an das Gleitteil 43 und dieses seinerseits an die Seite 27 des Plattenteils 23 des Schliessteils 22 angepresst wird. Dadurch wird der Behälter 18 am Schliessteil 22 gleitfähig abgedichtet.

Zur Ergänzung der ersten Abdichtungsmittel 32 ist das Schliessteil 22 in seinem unteren Bereich auf seiner dem Behälter 18 zugewandten Seite 27 mit einer Rinne 28 versehen, welche die Arbeitsflüssigkeit auffängt, die eventuell bei den Abdichtungsmitteln 32 durchsickern könnte. Diese Rinne 28 dient gleichzeitig als Verbindungselement zur festen Abstützung des Plattenteils 23 und somit des gesamten Schliessteils 22 am unteren Schlitten 7. Zum Wegleiten der eventuell aufgefangenen Arbeitsflüssigkeit ist die Rinne 28 mit einem Abflussstutzen 29 versehen, der mit nicht dargestellten, die Arbeitsflüssigkeit wegführenden Leitungen verbunden ist.

Zur Gewährleistung der Abdichtung können die zweiten Abdichtungsmittel in einer ersten Ausbildung, die in Fig. 3 und 4 ersichtlich ist, einen inneren Balg 30 und/oder einen äusseren Balg 31 umfassen, der den Führungsarm 13 auf zumindest einem Teil seiner Länge umschliesst. Das eine Ende des Balges 30 und/oder 31 ist mit dem Führungsarm 13 beispielsweise durch Kleben oder noch durch enges Umspannen abdichtend verbunden. Das andere Ende des Balges 30 und/oder 31 ist mit dem Schliessteil 22 beispielsweise durch Kleben oder noch mit Hilfe eines nicht dargestellten, am Schliessteil 22 aufgeschraubten Flansches abdichtend verbunden. Zum Wegleiten der eventuell im Balg 30 und/oder 31 aufgefangenen Arbeitsflüssigkeit sind an sich bekannte und deswegen nicht dargestellte Mittel wie beispielsweise Abflussstutzen vorgesehen, die mit nicht dargestellten, die Arbeitsflüssigkeit wegführenden Leitungen verbunden ist.

Zur Gewährleistung der Abdichtung können die zweiten Abdichtungsmittel in einer zweiten Ausbildung, die ebenfalls in Fig. 3 und 4 ersichtlich ist, als zwischen dem Führungsarm 13 und dem Schliessteil 22 angeordnete Dichtungsvorrichtung 33 ausgebildet sein. Diese Dichtungsvorrichtung 33 umfasst einen Hülsenteil 36, der an einer dem Ständer 4 zugewandten Seite 37 des Schliessteils 22 beispielsweise durch Anschrauben oder Kleben fest angeordnet ist. Der Hülsenteil 36 umschliesst den Führungsarm 13 mit Spiel, um Platz zu schaffen für zumindest zwei innerhalb des Hülsenteils 36 im Abstand voneinander angeordnete, den Führungsarm 13 abdichtend und gleitfähig umschliessende Dichtungsteile 38. Beispielsweise und wie in Fig. 7 im Querschnitt schematisch dargestellt, sind fünf ringförmige Dichtungsteile 38 vorgesehen, die integral mit einem Dichtungskörper 39 verbunden und daran als je ein ringförmiger innerer Vorsprung angeformt sind. Die ringförmigen Dichtungsteile 38 umschliessen den Führungsarm 13 abdichtend und gleitfähig. Dabei wird zwischen dem Führungsarm 13, dem am Hülsenteil 36 abgestützten Dichtungskörper 39 und je einem Paar von Dichtungsteilen 38 ein Dichtungsraum 40 definiert, der den Führungsarm 13 umschliesst und unter Gasdruck setzbar ist (dies ist nicht näher dargestellt, weil solche unter Gasdruck setzbare Dichtungen an sich bekannt sind). Zusammen mit den daran angeformten Dichtungsteilen 38 bildet der Dichtungskörper 39 eine an sich bekannte Labyrinthdichtung, die aus einem für Abdichtungszwecke üblicherweise verwendeten elastischen Kunststoff gefertigt ist.

Zur ergänzenden Abstützung des Plattenteils 23 des Schliessteils 22 am Behälter 18 kann, wie in Fig. 3 dargestellt, eine etwa U-förmige Klammer 41 den Plattenteil 23 an der Rückwand 19 des Behälters 18 festhalten. Die Klammer 41 ist an der Rückwand 19 des Behälters 18 beispielsweise durch Anschrauben oder Kleben befestigt und erlaubt das Vorbeigleiten des Plattenteils 23 beispielsweise mit Hilfe eines Gleitkörpers 46 aus reibungsarmem, beispielsweise graphithaltigem elastischem Kunststoff.

## Patentansprüche

1. Maschine zum funkenerosiven Schneiden eines Werkstücks (1) mittels einer draht- oder bandförmigen Werkzeugelektrode (2), die zwischen einer oberen und einer unteren Elektrodenführung (10,11) gespannt läuft, wobei die untere Elektrodenführung (11) über einen länglichen, eine horizontale Längsachse (15) aufweisenden Führungsarm (13) an einem Ständer (4) der Maschine abgestützt ist, die Maschine mit einem auf einem Kreuzschlitten (6,7) befestigten Behälter (18) für Arbeitsflüssigkeit versehen ist und der Behälter (18) eine ebene, dem Ständer (4) gegenüberliegende, vertikale Rückwand (19) mit einer Öffnung (20a,20b) aufweist, durch welche der Führungsarm (13) rechtwinklig hindurchragt, wobei parallel zur Rückwand (19) außerhalb des Behälters (18) an einer dem Ständer (4) zugewandten Seite (26) der Rückwand (19) ein plattenförmiges Schließteil (22) angeordnet ist, welches die Öffnung (20a,20b) der Rückwand (19) stets überdeckt, wobei das Schließteil (22) mit einer weiteren Öffnung (24) versehen ist, durch welche der Führungsarm (13) hindurchragt, wobei der untere der beiden Schlitten (7) mit dem Schließteil (22) verbunden ist, wobei erste Abdichtungsmittel (32) vorgesehen sind, die mit der Rückwand (19) des Behälters (18) und mit dem Schließteil (22) in Gleitkontakt stehen, und wobei zweite Abdichtungsmittel (30,31;33) vorgesehen sind, die mit dem Führungsarm (13) in direktem Kontakt stehen und ihn gegenüber dem Schließteil (22) abdichten,
**dadurch gekennzeichnet**,
- daß das Schließteil (22) fest mit dem unteren Schlitten (7) verbunden ist,
- daß die ersten Abdichtungsmittel (32) durch Gasdruck beaufschlagbar sind,
- daß das Schließteil (22) in seinem unteren Bereich auf seiner dem Behälter (18) zugewandten Seite (27) mit einer Rinne (28) mit einem Abflußstutzen (29) versehen ist, und
- daß die Rinne (28) als das Schließteil (22) am unteren Schlitten (7) fest abstützendes Verbindungselement ausgebildet ist.

2. Maschine zum funkenerosiven Schneiden nach Anspruch 1, **dadurch gekennzeichnet**,
daß nur das obere Ende des Schließteiles (22) gegenüber der Behälterrückwand (19) über eine Gleitführung (41, 46) abgestützt ist.

3. Maschine zum funkenerosiven Schneiden nach Anspruch 1, **dadurch gekennzeichnet**,
daß die ersten Abdichtungsmittel (32) einen Gleitkörper (46) aufweisen, der in dem U-förmigen Profil (41) geführt ist.

4. Maschine zum funkenerosiven Schneiden nach Anspruch 1, **dadurch gekennzeichnet**,
daß die zweiten Abdichtungsmittel zur gleitfähigen Abdichtung zwischen dem Führungsarm (13) und dem Schließteil (22) zumindest einen Balg (30,31) umfassen, der den Führungsarm (13) auf zumindest einem Teil seiner Länge umschließt, wobei das eine Ende des Balges (30,31) mit einem Führungsarm (13) und das andere Ende des Balges (30,31) mit dem Schließteil (22) abdichtend verbunden ist.

5. Maschine zum funkenerosiven Schneiden nach Anspruch 1, **dadurch gekennzeichnet**,
daß mehrere Dichtungsteile (34) integral mit einem Dichtungskörper (35) verbunden und daran als je ein gewölbter Vorsprung angeformt sind.

6. Maschine zum funkenerosiven Schneiden nach Anspruch 5, **dadurch gekennzeichnet**,
daß der Dichtungskörper (35) zusammen mit den daran angeformten Dichtungsteilen (34) eine Labyrinthdichtung bildet.

7. Maschine zum funkenerosiven Schneiden nach Anspruch 1, **dadurch gekennzeichnet**,
daß die zweiten Abdichtungsmittel zur gleitfähigen Abdichtung zwischen dem Führungsarm (13) und dem Schließteil (22) als Dichtungsvorrichtung (33) ausgebildet sind und einen Hülsenteil (36), der an einer dem Ständer (4) zugewandten Seite (37) des Schließteils (22) fest angeordnet ist und den Führungsarm (13) mit Spiel umschließt, sowie zumindest zwei innerhalb des Hülsenteils (36) im Abstand voneinander angeordnete, den Führungsarm (13) abdichtend und gleitfähig umschließende Dichtungsteile umfassen, wobei der Hülsenteil (36) zumindest mit den beiden Dichtungsteilen und dem Führungsarm (13) zusammenwirkt, um einen den Führungsarm (13) umschließenden Dichtungsraum zu definieren.

8. Maschine zum funkenerosiven Schneiden nach Anspruch 1, **dadurch gekennzeichnet**,
daß die ersten Abdichtungsmittel (32) zumindest zwei im Abstand voneinander angeordnete, aufblasbare Dichtungsteile (34) enthalten.

9. Maschine zum funkenerosiven Schneiden nach Anspruch 1, **dadurch gekennzeichnet**,
daß die ersten Abdichtungsmittel (32) ein U-förmiges Profil (42) mit einer darin eingesetzten, flexiblen Dichtung (45) aufweisen, wobei in den Hohlraum (44) zwischen der Dichtung (45) und dem U-förmigen Profil Druckluft einblasbar ist.

## Claims

1. A machine for cutting a workpiece (1) by electrical discharge machining, using a tool electrode (2) formed as a wire or strip and extending, under tension, between an upper and a lower electrode guide (10, 11), the lower electrode guide (11) being supported on a column (4) of the machine via an elongate guide arm (13) having a horizontal longitudinal axis (15), the machine being provided with a container (18) for working liquid, the said container being secured on a cross slide (6, 7) and having a plane vertical rear wall (19) which is opposite the column (4) and has an opening (20a, 20b), through which the guide arm (13) projects at right angles, and a plate-shaped closing part (22) is arranged parallel to the rear wall (19) outside the container (18) on a side (26) of the rear wall (19) facing the column (4), the said closing part (22) always covering the opening (20a, 20b) in the rear wall (19) and being provided with a further opening (24) through which the guide arm (13) projects, the lower of the two slides (7) being connected to the closing part (22), and first sealing means (32) are provided and are in sliding contact with the rear wall (19) of the container (18) and with the closing part (22), and second sealing means (30, 31; 33) are provided and are in direct contact with the guide arm (13) and seal it in relation to the closing part (22),
**characterised in that**:
- the closing part (22) is securely connected to the lower slide (7);
- the first sealing means (32) can be acted upon by gas pressure;
- in its lower region, on its side (27) facing the container (18), the closing part (22) is provided with a channel (28) with a discharge connecting piece (29); and
- the channel (28) is formed as the connecting member securely supporting the closing part (22) on the lower slide (7).

2. A machine for cutting by electrical discharge machining in accordance with claim 1, **characterised in that** only the upper end of the closing part (22), opposite the rear wall (19) of the container, is supported via a sliding guide (41, 46).

3. A machine for cutting by electrical discharge machining in accordance with claim 1, **characterised in that** the first sealing means (32) have a sliding body (46) which is guided in the U-shaped profile (41).

4. A machine for cutting by electrical discharge machining in accordance with claim 1, **characterised in that** the second sealing means for slidable sealing between the guide arm (13) and the closing part (22) comprise at least one bellows (30, 31) which surrounds the guide arm (13) over at least a part of its length, one end of the bellows (30, 31) being connected in a sealing manner to a guide arm (13) and the other end of the bellows (30, 31) being connected in a sealing manner to the closing part (22).

5. A machine for cutting by electrical discharge machining in accordance with claim 1, **characterised in that** a plurality of sealing parts (34) are integrally connected to a sealing body (35) and are moulded thereon as respective curved projections.

6. A machine for cutting by electrical discharge machining in accordance with claim 5, **characterised in that** the sealing body (35), together with the sealing parts (34) moulded thereon, forms a labyrinth seal.

7. A machine for cutting by electrical discharge machining in accordance with claim 1, **characterised in that** the second sealing means are formed as a sealing device (33) for slidable sealing between the guide arm (13) and the closing part (22), and the said means comprise a sleeve part (36) which is securely arranged on a side (37) of the closing part (22) facing the column (4) and which surrounds the guide arm (13) with play, and the said means also comprise at least two sealing parts which are arranged inside the sleeve part (36) at a distance from one another, and which slidably surround the guide arm (13) in a sealing manner, the sleeve part (36) co-operating at least with the two sealing parts and the guide arm (13) in order to define a sealing chamber surrounding the guide arm (13).

8. A machine for cutting by electrical discharge machining in accordance with claim 1, **characterised in that** the first sealing means (32) contain at least two inflatable sealing parts (34) arranged at a distance from one another.

9. A machine for cutting by electrical discharge machining in accordance with claim 1, **characterised in that** the first sealing means (32) have a U-shaped profile (42) with a flexible seal (45) inserted therein, and compressed air can be blown into the hollow chamber (44) between the seal (45) and the U-shaped profile.

## Revendications

1. Machine de découpage par électroérosion d'une pièce (1) au moyen d'une électrode-outil (2) en forme de bande ou de fil, qui se déplace tendue entre un guide supérieur et un guide inférieur (10, 11), le guide inférieur d'électrode (11) est appuyé, par l'intermédiaire d'un bras de guidage (13), allongé et comportant un axe longitudinal horizontal (15), sur un support (4) de la machine, cette machine est pourvue d'un récipient (18) pour liquide de travail, fixé sur un chariot à mouvements croisés (6, 7) et le récipient (18) comporte une paroi arrière (19) verticale plane située en regard du support (4) et pourvue d'une ouverture (20a, 20b) que traverse perpendiculairement le bras de guidage (13), il est prévu parallèlement à la paroi arrière (19) et, en-dehors du récipient (18), sur un coté (26) de la paroi arrière (19) qui est dirigée vers le support (4), une partie d'obturation (22) en forme de plaque qui recouvre constamment l'ouverture (20a, 20b) de la paroi arrière (19), cette partie d'obturation (22) est pourvue d'une autre ouverture (24) à travers laquelle passe le bras de guidage (13), le chariot inférieur (7) est relié à la partie d'obturation (22), il est prévu des premiers moyens d'étanchéité (32) qui sont en contact glissant avec la paroi arrière (19) du récipient (18) et avec la partie d'obturation (22), et il est prévu des seconds moyens d'étanchéité (30, 31, 33) qui sont directement en contact avec le bras de guidage (13) et qui assurent son étanchéité par rapport à la partie d'obturation (22), caractérisée en ce que :
- la partie d'obturation (22) est liée solidement au chariot inférieur (7);
- les premiers moyens d'étanchéité (32) peuvent être sollicités par pression de gaz;
- la partie d'obturation (22) est pourvue, dans sa zone inférieure et sur son côté (27) dirigé vers le récipient (18), d'une rigole (28) comportant une tubulure de décharge (29), et
- la rigole (28) est agencée comme un élément de liaison appuyant solidement la partie d'obturation (22) sur le chariot inférieur (7).

2. Machine de découpage par électroérosion selon la revendication 1, caractérisée en ce que seulement l'extrémité supérieure de la partie d'obturation (22) est soutenue en face de la paroi arrière (19) du récipient par l'intermédiaire d'un guide glissant (41, 46).

3. Machine de découpage par électroérosion selon la revendication 1, caractérisée en ce que les premiers moyens d'étanchéité (32) comprennent un corps glissant (46) qui est guidé dans le profilé (41) en forme de U.

4. Machine de découpage par électroérosion selon la revendication 1, caractérisée en ce que les seconds moyens d'étanchéité comportent, pour créer un joint d'étanchéité apte à glisser entre le bras de guidage (13) et la partie d'obturation (22), au moins un soufflet (30, 31) qui entoure le bras de guidage (13) au moins sur une partie de sa longueur, une extrémité du soufflet (30, 31) étant reliée de façon étanche au bras de guidage (13) et l'autre extrémité du soufflet (30, 31) à la partie d'obturation (22).

5. Machine de découpage par électroérosion selon la revendication 1, caractérisée en ce que plusieurs parties d'étanchéité (34) sont reliées unitairement à un corps d'étanchéité (35) et sont chacune formées sur celui-ci sous la forme d'une saillie bombée.

6. Machine de découpage par électroérosion selon la revendication 5, caractérisée en ce que le corps d'étanchéité (35) constitue en association avec les parties d'étanchéité (34) formées sur lui un joint en labyrinthe.

7. Machine de découpage par électroérosion selon la revendication 1, caractérisée en ce que les seconds moyens d'étanchéité sont agencés pour créer un joint d'étanchéité glissant entre le bras de guidage (13) et la partie d'obturation (22), comme un dispositif d'étanchéité (33) et comportent une partie formant fourreau (36) qui est disposé en position fixe sur un côté (37), dirigé vers le support (4) de la partie d'obturation (22) et qui entoure le bras de guidage (13) avec du jeu, ainsi qu'au moins deux parties d'étanchéité, situées à distance l'une de l'autre à l'intérieur de la partie formant fourreau (36) et entourant le bras de guidage (13) de façon étanche et glissante, cette partie formant fourreau (36) coopérant au moins avec les deux parties d'étanchéité et le bras de guidage (13) pour définir un volume d'étanchéité entourant le bras de guidage (13).

8. machine de découpage par électroérosion selon la revendication 1, caractérisée en ce que les premiers moyens d'étanchéité (32) contiennent au moins deux parties d'étanchéité (34) gonflables et espacées l'une de l'autre.

9. Machine de découpage par électroérosion selon la revendication 1, caractérisée en ce que les premiers moyens d'étanchéité (32) comportent un profilé en forme de U (42) contenant un joint flexible (45), de l'air comprimé pouvant être insufflé dans la cavité (44) existant entre le joint d'étanchéité (45) et le profilé en forme de U.
